Europäisches Patentamt

**European Patent Office**

**Office européen des brevets**

(19)

(11) Veröffentlichungsnummer: **0 136 254**
**B1**

(12)

# EUROPÄISCHE PATENTSCHRIFT

(45) Veröffentlichungstag der Patentschrift:
05.11.86

(51) Int. Cl.⁴: **H 02 H 1/06,** H 02 H 1/00

(21) Anmeldenummer: **84730085.2**

(22) Anmeldetag: **15.08.84**

(54) Stromversorgungseinrichtung für einen Überstromauslöser.

(30) Priorität: **01.09.83 DE 3331823**

(43) Veröffentlichungstag der Anmeldung:
**03.04.85 Patentblatt 85/14**

(45) Bekanntmachung des Hinweises auf die Patenterteilung:
**05.11.86 Patentblatt 86/45**

(84) Benannte Vertragsstaaten:
**FR IT**

(56) Entgegenhaltungen:
**CH-A-558 098**
**GB-A-2 054 296**
**US-A-4 271 447**
**US-A-4 274 121**

(73) Patentinhaber: **Siemens Aktiengesellschaft Berlin und München, Wittelsbacherplatz 2, D-8000 München 2 (DE)**

(72) Erfinder: **Müller, Bernhard, Ing. grad., Dielingsgrund 5A, D-1000 Berlin 49 (DE)**

EP 0 136 254 B1

## Beschreibung

Die Erfindung betrifft eine Stromversorgungseinrichtung eines Überstromauslösers, der einen Auslösemagneten und eine Auslöseschaltung mit einem Ausgang zur Abgabe eines Auslösesignals enthält, mit einer Vorrichtung zur Erfassung und Gleichrichtung von Leiterströmen in einer zu überwachenden elektrischen Energieversorgungsanlage, wobei dem Gleichspannungsausgang der Vorrichtung ein Spannungsregler mit einer Sollwert-Einstellvorrichtung nachgeordnet ist, an dessen Ausgang eine kapazitive Speichereinrichtung und parallel dazu eine Reihenschaltung aus einem steuerbaren Schalter und der Spule des Auslösemagneten angeschlossen ist.

Eine derartige aus der US-A- 271 447 bekannte Stromversorgungseinrichtung eines Überstromauslösers enthält eine Vorrichtung zur Erfassung und Gleichrichtung von Leiterströmen, wobei in den Leitern Stromwandler liegen, denen eine Vollweggleichrichterschaltung nachgeordnet ist. Der Gleichspannungsausgang der Vorrichtung zur Erfassung und Gleichrichtung ist über einen Meßwiderstand mit dem Eingang eines Spannungsreglers verbunden, an dessen Ausgang eine auf einen Sollwert geregelte Ausgangsspannung zur Verfügung steht. Der Spannungsregler enthält eine Sollwert-Einstellvorrichtung mit einem einstellbaren Potentiometer. An dem Ausgang des Spannungsreglers liegt eine aus zwei Ladekondensatoren bestehende kapazitive Speichereinrichtung; weiterhin ist an den Ausgang des Spannungsreglers eine in der US-A- 4 274 121 näher beschriebene Reihenschaltung aus einem steuerbaren Schalter und der Spule eines Auslösemagneten angeschlossen. Zur Überwachung der Leiterströme ist an den Meßwiderstand eine Auslöseschaltung mit ihrem Meßeingang angeschlossen, die einen Ausgang zur Abgabe eines Auslösesignals aufweist; dieser Ausgang ist mit dem Steuereingang des steuerbaren Schalters verbunden. Die bekannte Stromversorgungseinrichtung liefert also sowohl den Versorgungsstrom für die Auslöseschaltung als auch die Energie zur Erregung des Auslösemagneten.

Der Erfindung liegt die Aufgabe zugrunde, eine Stromversorgungseinrichtung eines Überstromauslösers anzugeben, die eine besonders verlustleistungsarme Speisung der Auslöseschaltung ermöglicht und in kurzer Zeit ein sicheres Ansprechen des Auslösemagneten bei kurzer Ansprechzeit gewährleistet.

Die erfindungsgemäße Lösung dieser Aufgabe besteht darin, daß bei der eingangs genannten Stromversorgungseinrichtung die Sollwert-Einstellvorrichtung einen Steuereingang aufweist, der mit dem Ausgang der Auslöseschaltung verbunden ist, und daß dem steuerbaren Schalter eine Anordnung zur Prüfung der Spannung an der kapazitiven Speichereinrichtung auf Überschreiten eines vorgegebenen Schwellenwertes zugeordnet ist, wobei der Ausgang der Anordnung mit dem Steuereingang des steuerbaren Schalters verbunden ist.

Die erfindungsgemäße Stromversorgungseinrichtung hat den Vorteil, daß die Ausgangsspannung des Spannungsreglers über den Ausgang der Auslöseschaltung steuerbar ist, so daß eine Anpassung der Ausgangsspannung an den Energiebedarf der Auslöseschaltung und des Auslösemagneten möglich ist. Zur Speisung der Auslöseschaltung ist nämlich die Spannung an dem Ausgang des Spannungsreglers auf einen niedrigen Sollwert geregelt, so daß die von der Auslöseschaltung aufgenommene Verlustleistung gering ist; ein Auslösesignal am Ausgang der Auslöseschaltung bewirkt eine Vergrößerung des Sollwertes der Spannung an dem Ausgang des Spannungsreglers und damit eine Erhöhung der Spannung an der kapazitiven Speichereinrichtung, so daß eine hohe Energie zur Erregung des Auslösemagneten für ein sicheres Ansprechen bei geringer Ansprechzeit zur Verfügung steht.

Ein weiterer Vorteil der erfindungsgemäßen Stromversorgungseinrichtung besteht darin, daß die Steuerung des steuerbaren Schalters durch eine Anordnung zur Prüfung der Spannung an der kapazitiven Speichereinrichtung auf Überschreiten eines vorgegebenen Schwellenwertes erfolgt; dadurch findet nämlich eine Erregung des Auslösemagneten erst dann statt, wenn in der kapazitiven Speichereinrichtung am Ausgang des Spannungsreglers eine genügend hohe Energie zur Verfügung steht, so daß stets ein sicheres Ansprechen des Auslösemagneten gewährleistet ist. Die Verkürzung der Ansprechzeit des Auslösemagneten durch die Erhöhung der Ausgangsspannung ist dabei wesentlich größer, als die zum Aufladen der kapazitiven Speichereinrichtung auf die erhöhte Ausgangsspannung benötigte Zeit.

Bei einer vorteilhaften Ausführungsform der erfindungsgemäßen Stromversorgungseinrichtung liegt in Reihe mit dem Ausgang des Spannungsreglers und Stromversorgungsanschlüssen der Auslöseschaltung ein weiterer steuerbarer Schalter, dessen Steuereingang mit dem Ausgang der Auslöseschaltung in Verbindung steht. Dadurch wird eine weitere Verkürzung der Auslösezeit des Auslösemagneten erreicht. Sobald nämlich an dem Ausgang der Auslöseschaltung ein Auslösesignal auftritt, trennt der weitere steuerbare Schalter die Auslöseschaltung von der Energieversorgung durch den Spannungsregler ab, so daß die gesamte von dem Spannungsregler gelieferte Energie für eine schnelle Aufladung der kapazitiven Speichereinrichtung auf die höhere Spannung zur Verfügung steht.

Bei einer weiteren vorteilhaften Ausführung der erfindungsgemäßen Stromversorgungseinrichtung besteht die kapazitive Speichereinrichtung aus einem Kondensator; zwischen den Stromversorgungsanschlüssen der Auslöseschaltung liegt ein weiterer Kondensator. Sobald nämlich der weitere steuerbare Schalter die Auslöseschaltung von dem Ausgang des Spannungsreglers abtrennt, wird der Kondensator der kapazitiven Speichereinrichtung auf die höhere Spannung aufgeladen, während die Auslöseschaltung eine Zeit lang von der in dem weiteren Kondensator gespeicherten Energie gespeist wird.

Aus Kostengründen kann es vorteilhaft sein, wenn die kapazitive Speichereinrichtung aus zwei in Reihe geschalteten Kondensatoren besteht, von denen einer parallel zu dem weiteren steuerbaren Schalter liegt. Zwar müssen im Vergleich zu der aus einem Kondensator bestehenden kapazitiven Speichereinrichtung die beiden in Reihe geschalteten Kondensatoren jeweils eine größere Kapazität aufweisen, um eine ebenso große Gesamtkapazität der kapazitiven Speichereinrichtung zu erhalten, jedoch wird nach dem Öffnen des weiteren steuerbaren Schalters jeder Kondensator nur auf eine Teilspannung der erhöhten Spannung am Ausgang des Spannungsreglers aufgeladen; daher können weniger spannungsfeste Kondensatoren Verwendung finden.

Bei einer weiteren vorteilhaften Ausführungsform der erfindungsgemäßen Stromversorgungseinrichtung sind in der Vorrichtung zur Erfassung und Gleichrichtung der Leiterströme den Leitern zugeordnete Stromwandler jeweils über sekundärseitig mit Meßwerteingängen der Auslöseschaltung verbundene Zwischenstromwandler mit den Wechsel spannungseingängen einer Gleichrichterschaltung verbunden, wobei der Gleichspannungsausgang der Gleichrichterschaltung direkt an den Eingang des Spannungsreglers angeschlossen ist. Der Strompfad der einzelnen Zwischenstromwandler weist einen besonders geringen Widerstand auf, so daß die kapazitive Speichereinrichtung bei einem Auslösesignal am Ausgang der Auslöseschaltung besonders schnell auf die höhere Spannung aufgeladen wird. Die Höhe der Meßspannung am Ausgang eines jeden Zwischenstromwandlers ergibt sich aus dessen Übersetzungsverhältnis.

In einer wegen ihrer Einfachheit besonders vorteilhaften Ausführung der erfindungsgemäßen Stromversorgungseinrichtung ist der steuerbare Schalter ein Thyristor und die Anordnung zur Prüfung der Spannung eine Reihenschaltung aus einer Zenerdiode und einem Widerstand, wobei die Verbindungsstelle von Zenerdiode und Widerstand mit dem Gate-Anschluß des Thyristors verbunden ist.

Ein einfacher und daher kostengünstiger Aufbau des Spannungsreglers wird weiterhin dadurch erreicht, daß die Sollwert-Einstellvorrichtung einen Komparator enthält, dessen einer Eingang mit dem Spannungsabgriff eines am Ausgang des Spannungsreglers liegenden Spannungsteilers verbunden ist und dessen weiterer Eingang an eine Referenzspannungsquelle angeschlossen ist, und daß der Ausgang des Komparators mit dem Steuereingang einer steuerbaren Schaltanordnung verbunden ist, die den Ausgang des Spannungsreglers bildet.

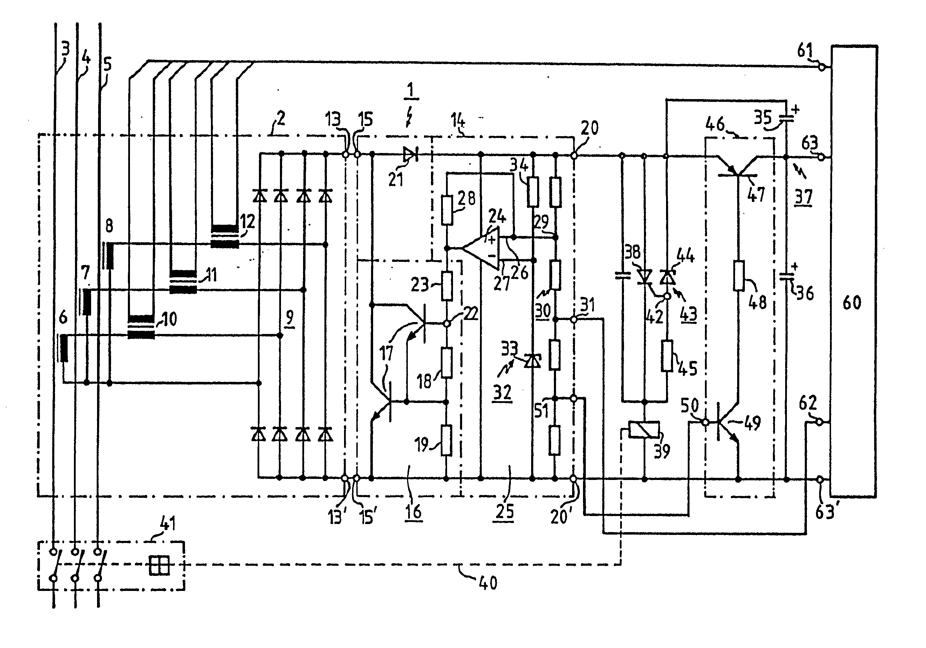

Zur Erläuterung der Erfindung ist in der Zeichnung ein bevorzugtes Ausführungsbeispiel der erfindungsgemäßen Stromversorgungseinrichtung dargestellt.

Die Stromversorgungseinrichtung 1 enthält eine Vorrichtung 2 zur Erfassung und Gleichrichtung von Leiterströmen, wobei jedem Leiter 3, 4, 5 ein Stromwandler 6, 7, 8 zugeordnet ist. Die Stromwandler 6, 7, 8 sind sekundärseitig in einer Sternschaltung angeordnet, indem ihre Ausgänge über jeweils eine Ausgangsklemme miteinander verbunden und an eine Eingangsklemme einer Gleichrichterschaltung 9 angeschlossen sind. Die weiteren Ausgangsklemmen der Stromwandler 6, 7, 8 sind jeweils über Zwischenstromwandler 10, 11, 12 mit weiteren Eingangsklemmen der Gleichrichterschaltung 9 verbunden. Die Gleichrichterschaltung 9 ist als Brückenschaltung ausgeführt, wobei jede ihrer Eingangsklemmen in bekannter Weise über jeweils zwei Dioden mit dem Gleichspannungsausgang 13, 13' der Gleichrichterschaltung 9 verbunden ist. Der Vorrichtung 2 zur Erfassung und Gleichrichtung der Leiterströme ist ein Spannungsregler 14 nachgeordnet, der mit seinem Eingang 15, 15' an den Gleichspannungsausgang 13, 13' der Gleichrichterschaltung 9 angeschlossen ist. Der als Parallelschaltregler ausgeführte Spannungsregler 14 enthält eine steuerbare Schaltanordnung 16, bestehend aus zwei zu einem Darlington-Transistor 17 angeordneten Transistoren und zwei Widerständen 18 und 19, die jeweils parallel zu den Basis-Emitter-Strecken der beiden Transistoren des Darlington-Transistors 17 liegen. Die Kollektor-Emitter-Strecke des Darlington-Transistors 17 bildet den Eingang 15, 15' des Spannungsreglers 14; der Ausgang 20, 20' des Spannungsreglers 14 ist über eine Diode 21 mit dessen Eingang 15, 15' verbunden, so daß ein Energiefluß nur von dem Eingang 15, 15' des Spannungsreglers 14 zu dessen Ausgang 20, 20' erfolgt. Der Basisanschluß des Darlington-Transistors 17 bildet den Steuereingang 22 der steuerbaren Schaltanordnung 16 und ist über einen Strombegrenzungswiderstand 23 mit dem Ausgang eines Komparators 24 verbunden der Bestandteil einer Sollwert-Einstellvorrichtung 25 ist. Der Komparator 24 besteht aus einem Operationsverstärker mit einem nichtinvertierenden und einem invertierenden Eingang, die einen Eingang 26 und einen weiteren Eingang 27 des Komparators 24 bilden. Der nichtinvertierende Eingang des Komparators 24 ist über einen Rückkopplungswiderstand 28 mit dem Ausgang des Komparators 24 verbunden und weiterhin an einen Spannungsabgriff 29 eines Spannungsteilers 30 angeschlossen. Der Spannungsteiler 30 besteht aus einer an dem Ausgang 20, 20' des Spannungsreglers 14 liegenden Reihenschaltung von mehreren Widerständen. Ein weiterer Abgriff des Spannungsteilers 30 bildet den Steuereingang 31 der Sollwert-Einstellvorrichtung 25. Der invertierende Eingang des Komparators 24 ist an eine Referenzspannungsquelle 32 angeschlossen, die aus einer Zenerdiode 33 besteht, die über einen Vorwiderstand 34 an dem Ausgang 20, 20' des Spannungsreglers 14 liegt. An den Ausgang 20, 20' des Spannungsreglers 14 ist weiterhin eine aus zwei in Reihe geschalteten Kondensatoren 35 und 36 bestehende kapazitive Speichereinrichtung 37 sowie eine Reihenschaltung aus einem steuerbaren Schalter 38 und der Spule eines Auslösemagneten 39 angeschlossen. Der Auslösemagnet 39 ist über eine mechanische Kraftübertragungseinrichtung 40 mit einer Abschaltvorrichtung 41 verbunden, die im Zuge der Leiter 3, 4, 5 mit den zu überwachenden Leiterströmen angeordnet ist. Dem steuerbaren Schalter 38, der aus einem Thyristor mit dem Gate-Anschluß als Steuereingang 42 besteht, ist eine Anordnung 43 zur Prüfung der Spannung der kapazitiven Speichereinrichtung 37 auf Überschreiten eines vorgegebenen Schwellenwertes zugeordnet. Diese Anordnung 43 ist aus einer Reihenschaltung von einer Zenerdiode 44 und einem Widerstand 45 gebildet, wobei die Verbindungsstelle der Zenerdiode 44 mit dem Widerstand 45 mit dem Gate-Anschluß des Thyristors verbunden ist, so daß der Widerstand 45 zwischen dem Gate-Anschluß und der Kathode des Thyristors liegt; die Zenerdiode 44 liegt mit ihrem anderen Anschluß an der Anode des Thyristors.

Der Stromversorgungseinrichtung 1 des Überstromauslösers ist eine Auslöseschaltung 60 zur Überwachung der Ströme in den Leitern 3, 4 und 5 zugeordnet, die mehrere Meßeingänge 61 und einen Ausgang 62 zur Abgabe eines Auslösesignals aufweist. Die Meßeingänge 61 der Auslöseschaltung 60 sind mit den Ausgängen der Zwischenstromwandler 10, 11, 12 verbunden, mit denen den zu überwachenden Leiterströmen proportionale Meßspannungen erzeugt werden. Der Ausgang 62 der Auslöseschaltung 60 ist an den Steuereingang 31 des Spannungsreglers 14 zur Vergrößerung des Sollwertes der Spannung an seinem Ausgang angeschlossen.

Die Energieversorgung der Auslöseschaltung 60 erfolgt durch die Stromversorgungseinrichtung 1, wobei in Reihe mit dem Ausgang 20, 20' des Spannungsreglers 14 und den Stromversorgungsanschlüssen 63, 63' der Auslöseschaltung 60 ein weiterer steuerbarer Schalter 46 liegt, dessen Schaltstrecke von einem Längstransistor 47 gebildet ist. Zur Steuerung des Längstransistors 47 liegt dieser mit seiner Basis-Emitter-Strecke über einen mit der Basis verbundenen Widerstand 48 und die Kollektor-Emitter-Strecke eines weiteren Transistors 49 an dem Ausgang 20, 20' des Spannungsreglers 14. Die Basis des weiteren Transistors 49 bildet den Steuereingang 50 des weiteren steuerbaren Schalters 46 und steht über einen Spannungsabgriff 51 des Spannungsteilers 30 mit dem Ausgang 62 der Auslöseschaltung 60 in Verbindung.

An den sekundärseitigen Ausgängen der Stromwandler 6, 7, 8 stehen den jeweiligen Leiterströmen proportionale Spannungen zur Verfügung, aus denen in der nachgeordneten Gleichrichterschaltung 9 eine ungeregelte Gleichspannung gebildet wird. Der Spannungsregler 14 erzeugt aus der ungeregelten Gleichspannung an seinem Eingang 15, 15' eine geregelte Spannung, deren Sollwert durch das Teilerverhältnis an dem Spannungsabgriff 29 des Spannungsteilers 30 und durch die Zenerspannung der Zenerdiode 33 festgelegt ist. Sobald nämlich die Spannung an dem Ausgang 20, 20' des Spannungsregl ers 14 den eingestellten Sollwert überschreitet, entsteht dementsprechend eine positive Spannung zwischen dem nichtinvertierenden Eingang 26 und dem invertierenden Eingang 27 des Komparators 24; dieser erzeugt infolgedessen an seinem Ausgang eine positive Spannung, die an den Widerständen 18, 19 jeweils einen den Darlington-Transistor 17 steuernden Spannungsabfall bewirkt. Der leitende Darlington-Transistor 17 schließt den Eingang 15, 15' des Spannungsreglers 14 kurz, wobei die Spannung an dessen Ausgang 20, 20' sinkt, weil der Kondensator 36 der kapazitiven Speichereinrichtung 37 über die durch ihn gespeiste Auslöseschaltung 60 entladen wird. Fällt dabei die Spannung an dem Ausgang 20, 20' des Spannungsreglers 14 unter den eingestellten Sollwert, so nimmt die Spannung am Ausgang des Komparators 24 infolge der negativen Spannung zwischen seinem nichtinvertierenden und invertierenden Eingang 26 bzw. 27 den Wert Null an; dementsprechend werden auch die Spannungen an den Widerständen 18 und 19 zu Null, so daß der Darlington-Transistor 17 in den sperrenden Zustand übergeht und der Kondensator 36 aufgeladen wird.

Bei einem Auslösesignal am Ausgang 62 der Auslöseschaltung 60 wird dieser niederohmig und schließt den Spannungsteiler 30 zwischen seinem dem Steuereingang 31 bildenden Abgriff und der Klemme 20' des Ausgangs 20, 20' des Spannungsreglers 14 kurz. Die damit verbundene Änderung des Teilerverhältnisses des Spannungsteilers 30 bewirkt eine Vergrößerung des Sollwertes der Ausgangsspannung des Spannungsreglers 14. Mit der Abgabe des Auslösesignals am Ausgang 62 der Auslöseschaltung 60 wird gleichzeitig die Basis-Emitter-Strecke des weiteren Transistors 49 kurzgeschlossen, so daß dieser hochohmig wird und dabei den Basisstrom für den Längstransistor 46 so reduziert, daß dieser in einen sperrenden Zustand übergeht und die Stromversorgung der Auslöseschaltung 60 über den Spannungsregler 14 unterbricht. Die Kondensatoren 35 und 36 der kapazitiven Speichereinrichtung 37 werden von der erhöhten Spannung am Ausgang 20, 20' des Spannungsreglers 14 aufgeladen. Die Kapazität des Kondensators 36 ist im Vergleich zu der des Kondensators 35 größer gewählt, so daß sich die Spannung an dem Kondensator 36 nur wenig erhöht, während der Kondensator 35 auf eine Spannung aufgeladen wird, die im wesentlichen der Spannungsdifferenz zwischen dem vergrößerten Sollwert und dem Sollwert vor Auftreten des Auslösesignals entspricht. Sobald die erhöhte Spannung an der kapazitiven Speichereinrichtung 37 einen durch die Zenerdiode 44 vorgegebenen Schwellenwert überschreitet, wird die Zenerdiode 44 leitend, wobei der Thyristor 38 durch den an dem Widerstand 45 auftretenden Spannungsabfall gezündet wird. Die Kondensatoren 35 und 36 der kapazitiven Speichereinrichtung 37 entladen sich über den Thyristor 38 und die Spule des Auslösemagneten 39, der wegen des hohen Entladestromes sicher anspricht und über die Kraftübertragungseinrichtung 40 die Abschaltvorrichtung 41 zum Auftrennen der Leiter 3, 4, 5 betätigt.

## Patentansprüche

1. Stromversorgungseinrichtung (1) eines Überstromauslösers, der einen Auslösemagneten (39) und eine Auslöseschaltung (60) mit einem Ausgang (62) zur Abgabe eines Auslösesignals enthält, mit einer Vorrichtung (2) zur Erfassung und Gleichrichtung von Leiterströmen in einer zu überwachenden elektrischen Energieübertragungsanlage, wobei dem Gleichspannungsausgang (13, 13') der Vorrichtung (2) ein Spannungsregler (14) mit einer Sollwert-Einstellvorrichtung (25) nachgeordnet ist, an dessen Ausgang (20, 20') eine kapazitive Speichereinrichtung (37) und parallel dazu eine Reihenschaltung aus einem steuerbaren Schalter (38) und der Spule des Auslösemagneten (39) angeschlossen ist, dadurch gekennzeichnet, daß die Sollwert-Einstellvorrichtung (25) einen Steuereingang (31) aufweist, der mit dem Ausgang (62) der Auslöseschaltung (60) verbunden ist, und daß dem steuerbaren Schalter (38) eine Anordnung (43) zur Prüfung der Spannung an der kapazitiven Speichereinrichtung (37) auf Überschreiten eines vorgegebenen Schwellenwertes zugeordnet ist, wobei der Ausgang der Anordnung (43) mit dem Steuereingang (42) des steuerbaren Schalters (38) verbunden ist.

2. Stromversorgungseinrichtung nach Anspruch 1, dadurch gekennzeichnet, daß in Reihe mit dem Ausgang (20, 20') des Spannungsreglers (14) und Stromversorgungsanschlüssen (63, 63') der Auslöseschaltung (60) ein weiterer steuerbarer Schalter (46) liegt, und daß der Steuereingang (50) des weiteren steuerbaren Schalters (46) mit dem Ausgang (62) der Auslöseschaltung (60) in Verbindung steht.

3. Stromversorgungseinrichtung nach Anspruch 2, dadurch gekennzeichnet, daß die kapazitive Speichereinrichtung (37) aus einem Kondensator besteht und daß zwischen den Stromversorgungsanschlüssen der Auslöseschaltung ein weiterer Kondensator liegt.

4. Stromversorgungseinrichtung nach Anspruch 2, dadurch gekennzeichnet, daß die kapazitive Speichereinrichtung (37) aus zwei in Reihe geschalteten Kondensatoren (35, 36) besteht, von denen einer (35) parallel zu dem weiteren steuerbaren Schalter (46) liegt.

5. Stromversorgungseinrichtung nach einem der vorangehenden Ansprüche, dadurch gekennzeichnet, daß in der Vorrichtung (2) zur Erfassung und Gleichrichtung der Leiterströme den Leitern (3, 4, 5) zugeordnete Stromwandler (6, 7, 8) jeweils über sekundärseitig mit Meßeingängen (61) der Auslöseschaltung (60) verbundene Zwischenstromwandler (10, 11, 12) mit Wechsel spannungseingängen einer Gleichrichterschaltung (9) verbunden sind, und daß der Gleichspannungsausgang (13, 13') der Gleichrichterschaltung (9) direkt an den Eingang (15, 15') des Spannungsreglers (14) angeschlossen ist.

6. Stromversorgungseinrichtung nach einem der vorangehenden Ansprüche, dadurch gekennzeichnet, daß der steuerbare Schalter (38) ein Thyristor ist und daß die Anordnung (43) zur Prüfung der Spannung eine Reihenschaltung aus einer Zenerdiode (44) und einem Widerstand (45) ist, wobei die Verbindungsstelle von Zenerdiode (44) und Widerstand (45) mit dem Gate-Anschluß des Thyristors verbunden ist.

7. Stromversorgungseinrichtung nach einem der vorangehenden Ansprüche, dadurch gekennzeichnet, daß die Sollwert-Einstellvorrichtung (25) einen Komparator (24) enthält, dessen einer Eingang (26) mit dem Spannungsabgriff (29) eines am Ausgang (20, 20') des Spannungsreglers (14) liegenden Spannungsteilers (30) verbunden ist, und dessen weiterer Eingang (27) an eine Referenzspannungsquelle (32) angeschlossen ist, und daß der Ausgang des Komparators (24) mit dem Steuereingang (22) einer steuerbaren Schaltanordnung (16) verbunden ist, die den Eingang (15, 15') des Spannungsreglers (14) bildet.

## Claims

1. A current supply device (1) of an overload circuit breaker, having a release magnet (39) and a release circuit (60) with an output (62) for the emission of a release signal, a device (2) for detecting and rectifying conductor currents in an electrical energy transmission system to be monitored, where the rectifier voltage output (13, 13') of the device (2) is connected to a voltage regulator (14) with a theoretical value setting device (25) whose output (20, 20') is connected to a capacitive storage device (37) and, in parallel therewith, to a series arrangement consisting of a controllable switch (38) and the coil of the release magnet (39), characterised in that the theoretical value setting device (25) has a control input (31) connected to the output (62) of the release circuit (60) and that the controllable switch (38) is assigned an arrangement (43) which serves to check whether the voltage connected to the capacitive storage device (37) exceeds a predetermined threshold value, where the output of the arrangement (43) is connected to the control input (42) of the controllable switch (38).

2. A current supply device as claimed in Claim 1, characterised in that a further controllable switch (46) is arranged in series with the output (20, 20') of the voltage regulator (14) and with current supply terminals (63, 63') of the release circuit (60) and that the control input (50) of the further, controllable switch (46) is connected to the output (62) of the release circuit (60).

3. A current supply device as claimed in Claim 2, characterised in that the capacitive storage device (37) consists of a capacitor and that a further capacitor is arranged between the current supply terminals of the release circuit.

4. A current supply device as claimed in Claim 2, characterised in that the capacitive storage device (37) consists of two series-connected capacitors (35, 36) of which one (35) is arranged in parallel with the further, controllable switch (46).

5. A current supply device as claimed in one of the preceding Claims, characterised in that the device (2) for detecting and rectifying the conductor currents has current transformers (6, 7, 8), assigned to the conductors (3, 4, 5), each connected to a.c. voltage inputs of the rectifier circuit (9) via intermediate current transformers (10, 11, 12), which are connected on the secondary side to measuring inputs (61) of th e release circuit (60), and that the d.c. voltage output (13, 13') of the rectifier circuit (9) is directly connected to the input (15, 15') of the voltage regulator (14).

6. A current supply device as claimed in one of the preceding Claims, characterised in that the controllable switch (38) is a thyristor and that the arrange ment (43) which serves to check the voltage represents a series connection of a Zener diode (44) and a resistor (45), where the connection point of the Zener diode (44). and the resistor (45) is itself connected to the gate terminal of the thyristor.

7. A current supply device as claimed in one of the preceding Claims, characterised in that the theoretical value setting device (25) contains a comparator (24) whose first input (26) is connected to the voltage tapping (29) of a voltage divider (30) connected to the output (20, 20') of the voltage regulator (14) and whose further input (27) is connected to a reference voltage source (32), and that the output of the comparator (24) is connected to the control input (22) of a controllable switching arrangement (16) which forms the input (15, 15') of the voltage regulator (14).

**Revendications**

1. Alimentation en énergie électrique (1) d'un disjoncteur à maximum de courant contenant un électroaimant de déclenchement (39) et un circuit de déclenchement (60) avec une sortie (62) pour délivrer un signal de déclenchement, alimentation qui comprend un dispositif (2) de détection et de redressement pour des courants traversant des conducteurs dans une installation de transport d'énergie électrique à surveiller, la sortie de tension continue (13, 13') du dispositif (2) étant suivie d'un régulateur de tension (14) avec un dispositif d'ajustement de la valeur de consigne (25), sur la sortie (20, 20') duquel sont branchés un dispositif accumulateur capacitif (37) et parallèlement à celui-ci le montage en série d'un interrupteur commandé (38) et de la bobine de l'électroaimant de déclenchement (39), caractérisée en ce que le dispositif d'ajustement de la valeur de consigne (25) présente une entrée de commande (31) qui est reliée à la sortie (62) du circuit de déclenchement (60) et qu'à l'interrupteur de commande (38) est coordonné un montage (43) pour contrôler si la tension sur le dispositif accumulateur capacitif (37) dépasse un seuil préfixé, la sortie de ce montage (43) étant reliée à l'entrée de commande (42) de l'interrupteur commandé (38).

2. Alimentation selon la revendication 1, caractérisée en ce qu'un interrupteur commandé supplémentaire (46) est monté en série avec la sortie (20, 20') du régulateur de tension (14) et des bornes d'alimentation (63, 63') du circuit de déclenchement (60) et que l'entrée de commande (50) de cet interrupteur (46) est en liaison avec la sortie (62) du circuit de déclenchement (60).

3. Alimentation selon la revendication 2, caractérisée en ce que le dispositif accumulateur capacitif (37) est formé d'un condensateur et qu'un condensateur supplémentaire est connecté entre les bornes d'alimentation du circuit de déclenchement.

4. Alimentation selon la revendication 2, caractérisée en ce que le dispositif accumulateur capacitif (37) est formé de deux condensateurs (35, 36) branchés en série, dont l'un (35) est monté en parallèle sur l'interrupteur commandé supplémentaire (46).

5. Alimentation selon une des revendications précédentes, caractérisée en ce que le dispositif (2) de détection et de redressement pour les courants traversant les conducteurs comporte des transformateurs de courant (6, 7, 8) coordonnés aux conducteurs (3, 4, 5), qui sont reliés aux entrées de tension alternative d'un montage redresseur (9) à travers des transformateurs de courant intermédiaires (10, 11, 12) dont les secondaires sont reliés à des entrées de mesure (61) du circuit de déclenchement (60), et que la sortie de tension continue (13, 13') du montage redresseur (9) est raccordée directement à l'entrée (15, 15') du régulateur de tension (14).

6. Alimentation selon une des revendications précédentes, caractérisée en ce que l'interrupteur commandé (38) est un thyristor et que le montage (43) pour contrôler la tension est un montage en série d'une diode Zener (44) et d'une résistance (45), la jonction de la diode Zener (44) et de la résistance (45) étant connectée à la borne de gâchette du thyristor.

7. Alimentation selon une des revendications précédentes, caractérisée en ce que le dispositif d'ajustement de la valeur de consigne (25) contient un comparateur (24) dont une entrée (26) est connectée à la prise de tension (29) d'un diviseur de tension (30) branché sur la sortie (20, 20') du régulateur de tension (14), et dont l'autre entrée (27) est raccordée à une source de tension de référence (32), et que la sortie du comparateur (24) est connectée à l'entrée de commande (22) d'un montage interrupteur commandé (16) qui constitue l'entrée (15, 15') du régulateur de tension (14).